Europäisches Patentamt

European Patent Office

Office européen des brevets

(11) Veröffentlichungsnummer : **0 433 576 B1**

(12) **EUROPÄISCHE PATENTSCHRIFT**

(45) Veröffentlichungstag der Patentschrift :
07.07.93 Patentblatt 93/27

(21) Anmeldenummer : 90118335.0

(22) Anmeldetag : 24.09.90

(51) Int. Cl.⁵ : **F04C 2/10**

(54) **Zahnringpumpe für Verbrennungsmotoren und automatische Getriebe.**

(30) Priorität : 17.11.89 DE 3938346

(43) Veröffentlichungstag der Anmeldung :
26.06.91 Patentblatt 91/26

(45) Bekanntmachung des Hinweises auf die
Patenterteilung :
07.07.93 Patentblatt 93/27

(84) Benannte Vertragsstaaten :
DE ES FR GB IT SE

(56) Entgegenhaltungen :
EP-A- 0 079 156
EP-A- 0 375 337
GB-A- 233 423
GB-A- 935 915
GB-A- 2 002 453

(56) Entgegenhaltungen :
PATENT ABSTRACTS OF JAPAN vol. 13, no.
593 (M-914)(3941) 27 Dezember 1989, & JP-
A-01 249971 (SUZUKI MOTOR CO. LTD.) 05
Oktober 1989,
PATENT ABSTRACTS OF JAPAN vol. 11, no.
48 (M-561)(2495) 13 Februar 1987, & JP-A-61
210281 (YAMADA SEISAKUSHO K. K.) 18 September 1986,
PATENT ABSTRACTS OF JAPAN vol. 14, no.
418 (M-1022)(4361) 10 September 1990, & JP-
A-02 163485 (MITSUBISHI METAL CORP.) 22
Juni 1990,

(73) Patentinhaber : Eisenmann, Siegfried A.,
Dipl.-Ing.
Conchesstrasse 25
W-7960 Aulendorf (DE)

(72) Erfinder : Eisenmann, Siegfried A., Dipl.-Ing.
Conchesstrasse 25
W-7960 Aulendorf (DE)

(74) Vertreter : Marx, Lothar, Dr. et al
Patentanwälte Schwabe, Sandmair, Marx
Stuntzstrasse 16
W-8000 München 80 (DE)

**Beschreibung**

Die Erfindung betrifft eine als Zahnringpumpe ausgebildete Ölpumpe für Kolbenverbrennungsmotoren und automatische Getriebe nach dem Oberbegriff des Patentanspruchs 1. Insbesondere betrifft die Erfindung eine derartige Ölpumpe für die Motoren und automatischen Getriebe von Kraftfahrzeugen. Bei Motoren dient die Pumpe normalerweise zur Versorgung des Motors mit Schmieröl, während sie bei Getrieben normalerweise dieses mit Drucköl zur Betätigung der Schaltelemente versorgt, aber auch mit Öl zum Kühlen des hydrodynamischen Wandlers und mit Schmieröl für die Zahnräder. Das Pumpengehäuse kann dabei direkt am Aggregatgehäuse angeflanscht sein. Bei den genannten automatischen Getrieben kann die Getriebeeingangswelle auch als Teil des anlaufenden Wandlergehäuse ausgebildet sein. Die Ausbildung der Ölpumpe als Zahnringpumpe, deren Ritzel unmittelbar auf der Hauptwelle des Aggregates sitzt, bietet viele Vorteile. Insbesondere ist sie aufbaumäßig sehr einfach und vermeidet gesonderte Antriebselemente für eine gesondert angeordnete Ölpumpe. Diesem wesentlichen Vorteil steht jedoch nachteilig gegenüber, daß bei den erwähnten Verbrennungsmotoren und Getrieben die Hauptwellen im Betrieb beträchtliche Querverlagerungen ausführen als Folge der sehr stark wechselnden Betriebsbedingungen. So liegt das Radialspiel, das die Mitte der Kurbelwelle des Motors eines Personenwagens ausführt, in der Größenordnung von 0,1 bis 0,2 mm.

Das hat zur Folge, daß das auf die Welle montierte Ritzel der Zahnringpumpe die Mittenverlagerung der Welle zum größten Teil mitmachen muß. Da das Hohlrad praktisch immer in einem gesonderten Gehäuse gelagert ist, das an das Motoren- oder Getriebegehäuse angeschraubt ist, kommen noch zusätzliche radiale Versätze hinzu, so daß sich die Abweichungen von der Soll-Position addieren und in der Summe mehrere Zehntel Millimeter betragen können. Macht man das Zahnspiel zwischen Ritzel und Hohlrad so groß, daß alle diese Fehler vom Verzahnungsspiel aufgefangen werden, ohne daß Zwänge und unzulässig große Belastungen die Verzahnung zerstören, so bringt dies wesentliche Nachteile mit sich. Zum einen wird die Abdichtung zwischen den Arbeitskammern für den Förderdruck nicht mehr ausreichen. Besonders bei niedriger Drehzahl des Motors oder des Getriebes spielt der volumetrische Wirkungsgrad der Pumpe eine große Rolle, der insbesondere bei der Zahnringpumpe vom Zahnflankenspiel abhängt. Hierbei ist zu berücksichtigen, daß bei den durch die Erfindung verbesserten Pumpen, bei welchen das Hohlrad nur einen Zahn mehr hat als das Ritzel, sämtliche Zähne des Ritzels und des Hohlrades ständig miteinander im Eingriff sein sollen. Die Forderung nach hohem Zahnspiel zum Ausgleich der Ritzelverlagerungen führt dann also auch zu einem sehr hohen Spiel, nicht nur zwischen den treibenden Zahnflanken, sondern auch den abdichtenden Zahnköpfen. Das führt zwangsläufig zu einer erheblichen Verschlechterung des volumetrischen Wirkungsgrades.

Da für die Erzeugung von Geräuschen bekanntlich verhältnismäßig wenig Energie erforderlich ist, neigen Zahnräder mit großem Zahnspiel dazu, aufeinander zu hämmern, insbesondere dann, wenn instationäre Bewegungszustände vorliegen, wie dies bei den durch die Erfindung verbesserten Zahnringpumpen der Fall ist. Insbesondere bei den Kurbelwellen von Kraftfahrzeugen liegen solche instationären Bewegungen nicht nur in radialer sondern auch Umfangsrichtung vor, so daß eine Kombination aus translatorischer und rotatorischer Schwingung entsteht, die sich auf das Ritzel nahezu voll überträgt. Da das Hohlrad seinen eigenen dynamischen Bewegungsgesetzen folgt, tritt bei großem Zahnspiel ein heute als nicht mehr tragbar angesehenes Hämmergeräusch auf.

Bei den heute verwendeten Zahnringpumpen der eingangs umrissenen Art ist in der Regel die Zahnform des einen Rades durch Abrollen an der Zahnform des anderen Rades definiert, was natürlich einen bestimmten Achsabstand voraussetzt. Bei großem Zahnspiel - und das ist hier erforderlich, wenn nicht andere maßnahmen ergriffen werden - sind diese Erzeugungsbedingungen nicht mehr gegeben, so daß die Forderung nach konstantem Drehwinkelübersetzungsverhältnis in jeder relativen Winkellage nicht mehr erfüllt ist. Auch diese Fehler erzeugen dann Beschleunigungen und Verzögerungen, die sich als Hämmern bemerkbar machen.

Man hat versucht, dieser Problematik Herr zu werden, indem man nicht nur das Zahnspiel groß wählte, sondern auch das Lagerspiel des Hohlrades in seinem Gehäuse. Das führt aber nicht nur ebenfalls zu Geräuschen, sondern auch dazu, daß die Verzahnung rasch verschleißt. Darüberhinaus bieten die insoweit bisher verwendeten Zahnflankenformen, die meist als verhältnismäßig leicht berechenbare und herstellbare Kreisbögen und Trochoiden festgelegt waren, ungünstige Eingriffswinkel, zu kleine Krümmungsradien an den Eingriffsstellen und schlechte oder gar keine Eingriffsverhältnisse im Zahngrund.

Lagert man das Ritzel mit einem Bund im Pumpengehäuse, so verlängert das den Motor bzw. das Getriebe und erhöht den Bauaufwand.

Aus der JP-A-1-249971, die inhaltsgleich mit der US-A-4,976,595 ist, ist eine Pumpe mit den im Oberbegriff des Patentanspruchs 1 aufgelisteten Merkmalen bekannt. Diese bekannte Pumpe schlägt jedoch vor, eine Lagerung des Hohlrades mit großem Lagerspiel vorzusehen. Auch bei dieser bekannten Pumpe ist nachteilig, daß ein konstantes Drehwinkelübersetzungsverhältnis in jeder relativen Winkellage nicht möglich ist, so daß auch hier unerwünschte Beschleunigungen und Verzögerungen auftreten können.

Aus der GB-A-233 423 ist eine Zahnringpumpe bekannt, bei der das Hohlrad und das Ritzel mit ihren Verzahnungen in Radialrichtung mit minimalem Spiel in- bzw. aufeinander gelagert sind, wobei die Zahnköpfe und -lücken der Räder das Profil von Zykloiden aufweisen, die durch Abrollen von Rollkreisen an konzentrisch zu den jeweiligen Radachsen verlaufenden Festkreisen gebildet sind. Dabei weisen die Zahnköpfe des Ritzels und die Zahnlücken des Hohlrades jeweils die Form von Epizykloiden auf, die durch Abrollen eines ersten Rollkreises gebildet sind, wobei die Zahnlücken des Ritzels und die Zahnköpfe des Hohlrades jeweils die Form von Hypozykloiden haben, die durch Abrollen eines zweiten Rollkreises gebildet sind und daß die Summe der Umfänge der beiden Rollkreise gleich der Zahnteilung der Räder auf deren Festkreisen ist. Folglich sind bei der bekannten Pumpe das Hohlrad und das Ritzel unabhängig voneinander im Gehäuse gelagert.

Die Erfindung löst die Aufgabe, die Zahnringpumpen nach dem Oberbegriff des Anspruchs 1 in bezug auf Geräuscharmut und Verschleißfestigkeit und volumetrischen Wirkungsgrad erheblich zu verbessern. Sie geht hierbei von dem Grundgedanken aus, daß die Verzahnung selbst mit großer Präzision und minimalem Spiel ausgebildet wird und daß die Problematik der starken Ausschläge des Ritzelmittelpunkts dadurch gelöst wird, daß die radiale Abstützung des Hohlrades im Gehäuse oder die radiale Lagerung des Ritzels auf der Welle mit die genannten Ausschläge aufnehmendem Spiel erfolgt.

Die Lösung dieser Aufgabe erfolgt gemäß der Erfindung durch die Weiterbildung gemäß den kennzeichnenden Merkmalen des Anspruchs 1.

Das "große" Spiel zwischen dem Hohlrad und dem Gehäuse bzw. zwischen dem Ritzel und der Welle ist vorzugsweise nur wenige Hundertstel Millimeter größer als das Doppelte der nach üblichem Verschleiß zu erwartenden maximalen Abweichung der Wellenmitte von der idealen Lage derselben.

Die gewählte Verzahnung erlaubt bei der ersten Alternative eine optimale präzise Abstützung, also Lagerung des Hohlrades auf dem Ritzel, so daß das Hohlrad die radialen Versetzungen des Ritzels und der Welle mitmachen kann, ohne daß hierbei übermäßig große Kräfte auftreten. Die Abstützung des Hohlrades gegen Mitnahme zu einer Drehung um die Achse des Ritzels erfolgt dabei wie üblich durch Umfangslagerung im Gehäuse. Dadurch, daß die Lagerbohrung im Gehäuse aber einen etwas größeren Durchmesser aufweist als der Außendurchmesser des Hohlrades, kann das Hohlrad unterschiedliche Radialpositionen durch Anliegen an unterschiedlichen Stellen seiner Umfangslagerung im Gehäuse ausgleichen.

Eine solche Ausbildung erlaubt nicht nur eine optimale Anzahl von Stützstellen des Hohlrades auf dem Ritzel. Die Stützstellen weisen darüberhinaus auch eine nur kleine spezifische Pressung (Hertz'sche Pressung) auf, so daß sie den auftretenden dynamischen Beanspruchungen gewachsen sind. Die Stützstellen sind auch aufgrund der geringen Unterschiede in der Krümmung der jeweils miteinander zusammenarbeitenden Oberflächen von Ritzelzahn und Hohlradzahn sehr gut in der Lage instationäre hydrodynamische Schmierfilme aufzubauen, welche ein trennendes und tragendes Element zwischen der Verzahnungen bilden. Größer als ausreichend für den Aufbau eines solchen Filmes sollte das Zahnspiel nicht sein.

Ein weiterer wesentlicher Vorteil liegt darin, daß bei der gewählten Verzahnung der Eingriffswinkel an der Stelle tiefsten Zahneingriffs in der Höhe der Wälzkreise praktisch Null ist. Die dynamischen Kräfte zwischen den beiden Zahnrädern wirken in erster Linie in Richtung der Achsabstandslinie. Auch diese Kräfte werden sehr gut aufgenommen, da an der Stelle tiefsten Zahneingriffs die Verzahnung durch das miteinander in Eingriff stehen von Epi- und Hypozykloiden als Zahnkopf bzw. Zahnlücke eine mathematisch fast hunderprozentige Schmeigung aufweist, was dort auch zu einem optimalen Dämpfungsschmierfilm führt. In dem der Stelle tiefsten Zahneingriffs gegenüberliegenden Bereich liegen die Zahnköpfe der beiden Räder mit den größtmöglichen Krümmungsradien dieser Epi- bzw. Hypozykloiden aneinander an. Die Krümmungsradien sind auch etwa gleich groß. Die Hertz'schen Pressungen an diesen Eingriffsstellen haben somit dort ein Minimum. Da dort die Relativgeschwindigkeit zwischen den Zahnköpfen am größten ist, bildet sich durch die großen Krümmungsradien an den Eingriffsstellen ein die Gleitpartner trennender hydrodynamischer Schmierfilm aus. In Vergleichsmessungen hat sich gezeigt, daß die Verzahnung nicht nur sehr verschleißfest ist, sondern im gesamten praktisch interessierenden Drehzahlbereich sehr viel geräuschärmer läuft als alle bisher bekannten Pumpenverzahnungen gemäß dem Oberbegriff des Anspruchs 1; gleiche Förderleistung natürlich vorausgesetzt. Das Zahnspiel kann bei der Erfindung so gering gehalten werden, daß es gerade noch die Bildung des erforderlichen Schmierfilms zuläßt.

Das oben in Bezug auf die Ausführung mit großem Spiel zwischen Hohlradumfang und Zylinderwand des Gehäuses gesagte gilt sinngemäß auch für die Ausführung mit großem Spiel zwischen Welle und Ritzel, bei der das Spiel zwischen Hohlradumfang und Gehäuseinnenwand natürlich ein Minimum ist.

Verdrängermaschinen mit epi-zykloidischen Zanringverzahnungen sind seit vielen Jahrzehnten bekannt. So beschreibt die britische Patentschrift 9359/15 eine Zahnringmaschine, bei welcher die Zähne des Ritzels als Epizykloiden und die Zähne des Hohlrades als Hypozykloiden ausgebildet sind. Die Zahnlücken bei dieser Maschine sind allerdings als Komplementärkurve zu diesen Zykloiden ausgebildet, so daß die Maschine in der Praxis nicht laufen kann. Die Schrift "Kinematics of Gerotors" von Myron F. Hill (The Peter Reilly Company, Philadelphia, 1927) weist bereits auf diesen Mangel hin und schlägt vor, die Zahnlücken des Ritzels durch Epizylkoiden zu ersetzen.

Bei den Zahnringmachinen nach dem Oberbegriff des Anspruchs 1 wird ein möglichst kleiner Gesamtdurchmesser angestrebt. Dementsprechend ist der Durchmesser der durch das Ritzel geführten Welle verglichen mit dem Ritzel immer verhältnismäßig groß. Daher wird es gemäß der Erfindung bevorzugt, daß das Ritzel wenigstens sechs Zähne aufweist. Da auf der anderen Seite mit der Zähnezahl (bei gleichem Durchmesser) die Fördermenge abnimmt, sollte die Ritzelzähnezahl auch nicht zu groß werden. Hier werden daher Zahlen von 7 bis 11, besser 8 bis 10, noch besser 9 bevorzugt.

Bei der Erfindung ist es nicht notwendig, daß die Zahnbreite auf dem Wälzkreis oder Teilkreis der Verzahnung gemessen gleich der Zahnlücke der Verzahnung auf dem Wälzkreis bzw. Teilkreis ist. So kann man hier beispielsweise den (kleinen) Rollkreis zur Erzeugung der Epizykloiden etwas größer wählen als den (kleinen) Rollkreis zur Erzeugung der Hypozykloiden. Dadurch werden die Zähne des Ritzels etwas breiter und höher und die des Hohlrades etwas schmaler und niedriger. Es müssen dabei zwei Bedingungen eingehalten werden:

1. Die Summe der beiden unterschiedlichen Rollkreisradien muß gleich der Exzentrizität e sein und

2. an beiden Rädern müssen die Rollkreisradien zur Erzeugung der Epizykloiden und die Rollkreisradien zur Erzeugung der Hypozykloiden jeweils gleich sein.

Bevorzugt haben jedoch die beiden Rollkreise gleiche Durchmesser.

Wenn hier von kleinen und großen Rollkreisen gesprochen wird, so geschieht dies deshalb, weil bei der Erzeugung von Zykloiden innen auf einer kreisförmigen Grundlinie, also auf einem Festkreis, ein (kleiner) Rollkreis, dessen Durchmesser wesentlich geringer ist als der Radius des Festkreises beim Abrollen im Festkreis eine Hypozykloide erzeugt, die identisch mit der Zykloide ist, welche von einem (großen) Rollkreis erzeugt wird, dessen Durchmesser gleich dem um den Durchmesser des kleinen Rollkreises verringerten Durchmessers des Festkreises ist.

Ähnliches gilt für Epizykloiden. Hier wird beim Abrollen eines (kleinen) Rollkreises außen auf dem Festkreis die gleiche Epizykloide erzeugt wie beim Abrollen eines (großen) Rollkreises, dessen Durchmesser gleich der Summe der Durchmesser des kleinen Rollkreises und des Festkreises ist. Haben also die beiden kleinen Rollkreise zur Erzeugung der Epizykloiden und der Hypozykloiden gleiche Durchmesser, so wird wie die bevorzugt wird, die Zahnbreite sowohl des Ritzels als auch des Hohlrades auf dem entsprechenden Wälzkreis gemessen gleich.

Bekanntlich sind die in Achsabstandsrichtung wirkenden Komponenten der Zahnkräfte bei einem Getriebe um so kleiner, je kleiner der Eingriffswinkel der Verzahnung ist. Diese optimale Bedingung wird erfüllt, wenn die Merkmale des Anspruchs 2 wenigstens so weit erfüllt sind, daß der Radius des kleinen Rollkreises zur Erzeugung der Epizykloide beim Ritzel und der Radius kleinen Rollkreises zur Erzeugung der Epizykloide beim Hohlrad gleich sind. Das gilt, je nachdem ob man die kleinen oder die großen Rollkreise betrachtet, natürlich in beiden Fällen, sofern auch die Bedingung des Anspruchs 3 erfüllt ist. Dann ist nämlich die Eingriffslinie der Zähne ein geschlossener Kreis, der an der Stellen tiefsten Zahneingriffs die beiden Teilkreise bzw. Wälzkreise oder Festkreise als dritter Kreis berührt. Damit ist an dem Berührungspunkt der beiden Wälz- oder Teilkreise der Eingriffswinkel gleich Null, da dort die kreisförmige Eingriffslinie eine auf der Achsabstandslinie senkrecht stehende Tangente besitzt.

Besonders vorteilhaft wird die Bemessung und die Kinematik wenn die Merkmale des Anspruchs 4 eingehalten werden. Die Aussage dieses Anspruchs, daß die Summe der beiden kleinen Rollkreisradien gleich dem Achsabstand ist, ist identisch mit der Aussage, daß die Differenz der beiden großen Rollkreisradien gleich dem Achsabstand ist.

Weitere vorteilhafte Ausführungsmerkmale der Erfindung sind in den Ansprüchen 5 bis 8 gekennzeichnet.

Die exakte Herstellung von Verzahnungen gemäß der Erfindung erfolgt am einfachsten mittels numerisch gesteuerter Werkzeugmaschinen. Diese erlauben es, hoch genau und verhältnismäßig wirtschaftlich jede gewünschte digital vorliegende Kurvenform zu fertigen. Dabei kann jedes Zahnrad für sich hergestellt werden. Für große Stückzahlen, für welche die Erfindung in erster Linie in Frage kommt, wird man natürlich nur die Werkzeuge zur Vorserienfertigung der Zahnräder auf einer numerisch gesteuerten Werkzeugmaschine herstellen. Die Massenproduktion erfolgt dann beispielsweise durch Sinterung mit einem derartigen Werkzeug. Dies bietet noch den wesentlichen weiteren Vorteil, daß auch nichtmetallische extrem harte Werkstoffe zum Einsatz kommen können, wie z.B. Cermets.

Nachfolgend ist die Erfindung anhand der schematischen Zeichnungen näher erläutert.

Fig. 1 zeigt eine bevorzugte Ausführungsform einer auf der Kurbelwelle eines Kraftfahrzeugkolbenmotors sitzenden Schmierölpumpe mit großem Spiel zwischen Hohlradumfang und Gehäuse bei abgenommenen Gehäusedeckel.

Fig. 2 zeigt einen Zahnringsatz mit betont geringer Zähnezahl.

Fig. 3 zeigt die geometrischen Verhältnisse der Ritzelverzahnung gemäß Fig. 2.

Fig. 4 zeigt die geometrischen Verhältnisse der Hohlradverzahnung gemäß Fig. 2.

Fig. 5 zeigt noch einmal die Geometrie der Verzahnung gemäß Fig. 2 bis 4, wobei jedoch die Entstehung der Epi- und Hypozykloiden durch die kleinen Rollkreise dargestellt ist.

Fig. 6 zeigt in gleicher Darstellung wie Fig. 1 eine Ausführung der Erfindung mit großem Spiel zwischen Welle und Ritzel.

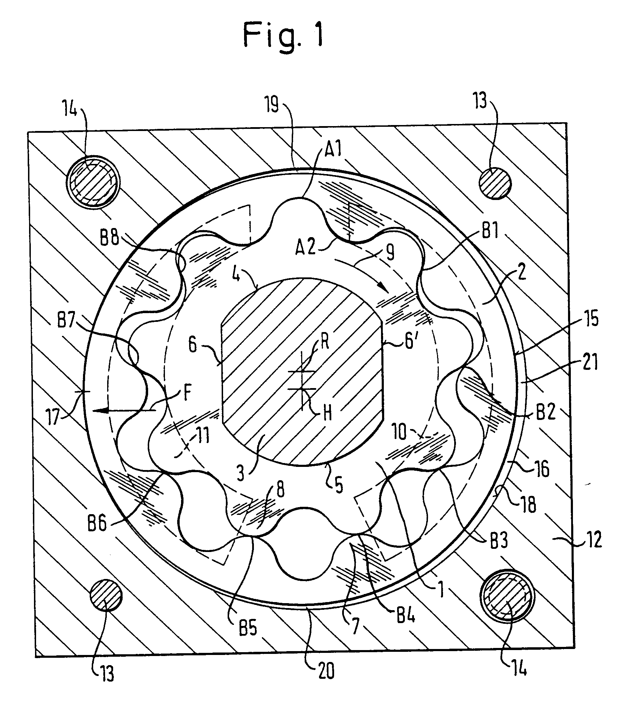

Bei der in Fig. 1 gezeigten Ölpumpe sitzt das Ritzel 1 auf der Antriebswelle 3. Die Zentrierung erfolgt über die zylindrischen Wellenumfangsteile 4 und 5 und die Drehmomentübertragung über den Zweiflach 6 und 6'. Das Hohlrad 2 kämmt mit seinen Innenzähnen 7 mit den Außenzähnen 8 des Ritzels. Bei Drehung in Richtung des Pfeiles 9 ist die gestrichelt gezeigte Seitenkammer 10 die Saugöffnung während die ebenfalls gestrichelt gezeigte Seitenkammer 11 die Drucköffnung der Pumpe darstellt. Beide Seitenkammern 10 sind im Gehäuse 12 als Vertiefung hinter dem Zahnradraum angeordnet. Das Gehäuse ist beispielsweise über Paßstifte 13 und Schrauben 14 mit dem Motorgehäuse oder Getriebegehäuse zentriert und verschraubt, in welchem die Antriebswelle 3 gelagert ist. Entsprechend der Erfindung ist das Hohlrad 2 mit seiner Außenumfangsfläche 15 gegenüber dem Pumpengehäuse 12 mit sehr großem Radialspiel 16 von z.B. 4 Promille des Hohlradumfangs gelagert, das in Fig. 1 der Deutlichkeit wegen übertrieben groß dargestellt ist. Auf der Druckseite der Pumpe, also im Bereich der Seitenkammer 11, übt der Hydraulikdruck eine nach außen gerichtete Kraft (Resultierende) F auf das Hohlrad 2 aus, so daß es im Punkt 17 mit seinem Außendurchmesser 15 in der Gehäusebohrung 18 zur Anlage kommt. Das ist aber nur dann der Fall, wenn, wie in der Zeichnung dargestellt, die Hohlradmitte H in Achsabstandsrichtung mit der Mitte der zylindrischen Gehäusebohrung 18 zusammenfällt. Da wegen des bei der Erfindung vorgesehenen engen Zahnspiels das Hohlrad die Radialbewegungen des Ritzels zum größten Teil mitmacht, ist insbesondere in Achsabstandsrichtung an den Stellen 19 und 20 ein Bewegungsfreiraum für das Hohlrad vorgesehen, der bei einer kreiszylindrischen Höhlung 18 im Gehäuse zu dem übermäßigen Hohlradlaufspiel 16 führt. Es ist möglich, zur Stabilisierung der Lagerung des Hohlrades im Gehäuse die Höhlung 18 als sogenanntes Zitronenspiellager auszuführen, bei welchem der Lagerspalt bei 19 und 20 größer ausgeführt ist, als an der Stelle 17 bzw. 21. Solche Zitronenspiellager werden sehr viel bei Turbomaschinen und Turbogetrieben verwendet, zur hydrodynamischen Stabilisierung der Welle, um gefährliche Radialschwingungen zu unterbinden. Naturgemäß sind solche Lagerformen aber aufwendig in der Herstellung. Bei der Beschreibung der Erfindung ist daher hier eine kreisförmige Lagerung des Hohlrades im Gehäuse gezeigt, obwohl ein Lager mit "Zitronenbohrung" eine weitere Geräuschminderung mit sich bringen sollte.

Führt nun der Mittelpunkt der Welle 3 und somit auch das Ritzel 1 radiale Zapfenverlagerungsbewegungen aus und treten durch ungünstige Toleranz-Summation bei der Zentrierung des Pumpengehäuses 12 gegenüber dem in der Zeichnung nicht dargestellten Motoren- oder Getriebegehäuse Versetzungen auf, dann können diese in Richtung der Linie 17 - 21, also senkrecht zur Achsabstandslinie 19 - 20 leicht ausgeglichen werden, weil in dieser Richtung der Hohlradmittelpunkt H gegenüber dem Ritzelmittelpunkt R durch leichtes Verdrehen des Hohlrades in der Verzahnung ausweichen kann. Das heißt, die Achsabstandslinie würde sich in diesem Fall etwas verdrehen. Da es sich jedoch auch in dieser Richtung um höchst dynamische Lagerveränderungen handelt, die mit der Frequenz der Motordrehzahl, z.B. 7000/min auftreten, müßte sich die Achsabstandlinie mit derselben Drehzahl hin- und zurückdrehen, was zu sehr hohen Beschleunigungen und Massenkräften führen würde.

In Richtung der Achsabstandslinie 19 - 20 jedoch ist bei geringem Zahnspiel ein erhöhtes Lagerspiel absolut unerläßlich. Ist in dieser Richtung der Gesamtversatz, nämlich Gehäuseversatz plus dynamische Zapfenverlagerung größer als der verbleibende radiale Lagerspalt bei 19 oder 20, dann kann es vorkommen, daß die Zahnringverzahnung zum Beispiel die Last des vorderen Kurbelwellenlagers auffangen muß, die mehrere zehntausend Newton beträgt. Eine Zerstörung der Zahnringverzahnung, zumindest ein schneller Verschleiß wäre die Folge. Somit richtet sich das Hohlradlaufspiel 21 nach dem Mindestspalt 19 und 20, was bei einer kreisrunden Hohlradlagerfläche 18 im Gehäuse bedeutet, daß das Spiel 21 so groß sein muß wie die Summe der Radialspalte 19 und 20.

Als Folge der Zapfenverlängerung in Achsabstandsrichtung 19 - 20 wird der Berührungspunkt 17 in noch viel höherem Maße ständig seine Lage ändern müssen, was bedeutet, daß die Stelle kleinsten Schmierfilms ständig, und zwar vielfach mit hoher Frequenz, ihre Lage ändert. Nach der Theorie des hydrodynamischen Gleitlagers liegt damit ein instationärer Belastungsfall vor mit sehr komplizierten Bewegungsabläufen. Das Hohlrad kommt bei Verwendung einer der hier bisher üblichen Verzahnungen ins Flattern. Dann ist Hämmern und damit starke Geräuschentwicklung mit allen anderen Folgen wie Verschleiß oder Schwingkaviation im Schmierfilm und in der Arbeitsräumen eine zwangsläufige Folge.

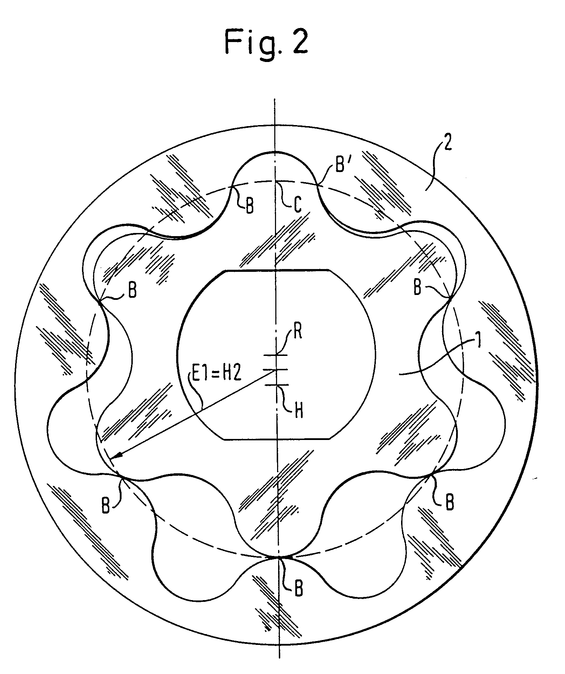

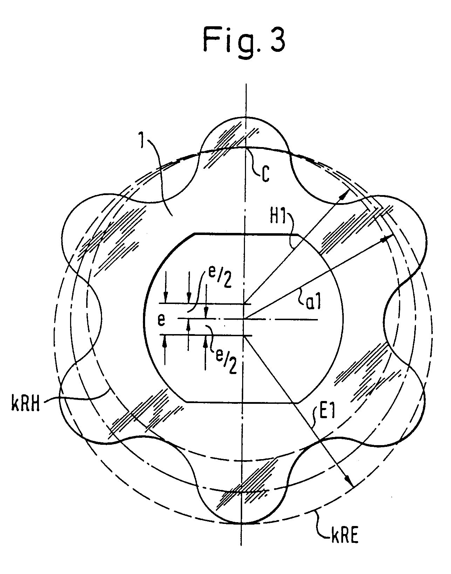

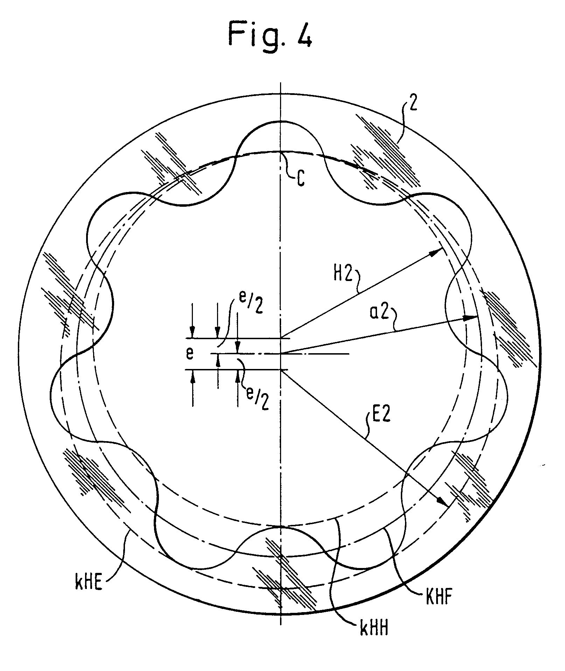

Die Erfindung vermeidet das durch Verwendung einer Verzahnung mit höchster Tragfähigkeit und engstem Gesamtzahnspiel. Dem Zahneingriff A1 in der gezeichneten Drehlage bzw. A2 der um eine halbe Ritzelzahnteilung weitergedrehten Drehlage mit fast 100-prozentiger Schmiegung des Zahnkopfes an den Zahnfuß des Gegenrades stehen im gezeichneten Beispiel acht Zahnkopfeingriffsstellen B1 bis B8 gegenüber, die ein Höchstmaß an Tragfähigkeit und Dämpfung sicherstellen. Beim Umlauf der Zahnräder entsteht an den Stellen A1 oder A2 ein Quetschölfilm, an den Stellen B3 bis B6 zwischen den Zahnköpfen ein hydrodynamischer Schmierfilm, die zusammenwirkend in der Lage sind, das Hohlrad auf der Zahnringverzahnung regelrecht hydrodynamisch zu lagern. Hierbei sollte die Zahl von B-Stützstellen nicht zu klein sein. Die für die jeweiligen Betriebsbedingungen notwendige Mindestzähnezahl wird am besten empirisch ermittelt. Gut bewährt hat sich die in dieser Figur 1 dargestellte Verzahnung mit 9 : 10 Zähnen. Es hat sich überraschend gezeigt, daß sich für die Erfindung am besten eine Zahnringverzahnung eignet, deren grundlegende Geometrie schon seit mehr als einem Jahrhundert bekannt ist, aber wieder in Vergessenheit geriet (Gerotors, 1927). Um die geometrischen Verhältnisse deutlicher für den Erfindungsgedanken darzustellen, ist in Fig. 2 ein Laufsatz gezeigt mit einer 6 : 7 Verzahnung, dessen Ritzel und Hohlrad in Fig. 3 und 4 nochmals getrennt dargestellt sind. Ausgegangen wird von einem Achsabstand bzw. einer Exzentizität e. Bei einer Zähnezahldifferenz von eins ist dann der Modul m als Maß für die Zahnteilung ($t = m \times \pi$) gleich der zweifachen Exzentizität e. In Fig. 3 errechnet sich somit der Wälz- oder Teilkreisradius des Ritzels zu $a1 = m \times Z1 = 2e \times Z1$. Analog dazu errechnet sich in Fig. 4 der Teilkreisradius a2 des Hohlrades zu $a2 = m \times Z2 = 2e \times Z2$. Beide Teilkreise oder Wälzkreise sollen schlupffrei aneinander abrollen.

Wählt man beim Ritzel als großen Rollkreis zur Erzeugung der Zahnkopfepizykloiden (Fig. 3) einen Kreis mit dem Radius $E1 = a1 + \frac{e}{2}$ und beim Hohlrad als großen Rollkreis zur Erzeugung der Zahnkopfhypozykloide (Fig. 4) einen Kreis mit Radius $H2 = a2 - \frac{e}{2}$, dann sind, wie man leicht nachweisen kann, diese beiden Rollkreise zur Erzeugung der sich über den Ritzelfestkreis nach außen und über den Hohlradfestkreis nach innen erhebenden jeweils von einem vollen Zyxkloidenbogen begrenzte Zahnköpfe gleich. In Fig. 2 ist dieser gemeinsame "große Zahnkopfrollkreis" gestrichelt eingezeichnet. Er ist zugleich der geometrische Ort aller Zahnkopfeingriffspunkte B und er berührt im Punkt C gleichzeitig die beiden mit den Teilkreisen identischen Festkreise mit den Radien a1 und a2 (Fig. 3 und 4). Wie man in Fig. 3 und 4 leicht erkennen kann, ist beim Ritzel jeder zweite Epizykloidenbogen und beim Hohlrad jeder zweite Hypozykloidenbogen weggelassen, damit Zwischenräume (Zahnlücken) entstehen für einen soliden Kämmeingriff. Auch für die weggelassenen Zykloidenbogen gelten die oben beschriebenen Verhältnisse. In analoger Weise werden die Zahnlücken ebenfalls als Epi- und Hypozykloiden geformt, die durch große Rollkreise entstehen, deren Radius beim Ritzel (Fig. 3) um den Betrag $\frac{e}{2}$ kleiner und beim Hohlrad um den Betrag $\frac{e}{2}$ größer als der jeweilige Festkreisradius ist.

Läßt man nun den größeren der beiden großen Rollkreise um den Festkreis des Hohlrades rotieren, so erzeugt er außen auf diesem eine geschlossene Folge von Epizykloiden. Läßt man von diesen jede zweite weg und ersetzt sie durch die jeweils die Zähne nach innen begrenzenden Hypozykloiden, so sieht man, daß die die Zahnlücken des Hohlrades begrenzenden Epizykloiden mit einer gemeinsamen Tangente, welche senkrecht zum Festkreis verläuft, in die die Zähne begrenzenden Hypozykloiden übergehen. Auch von diesen wird natürlich jede zweite weggelassen.

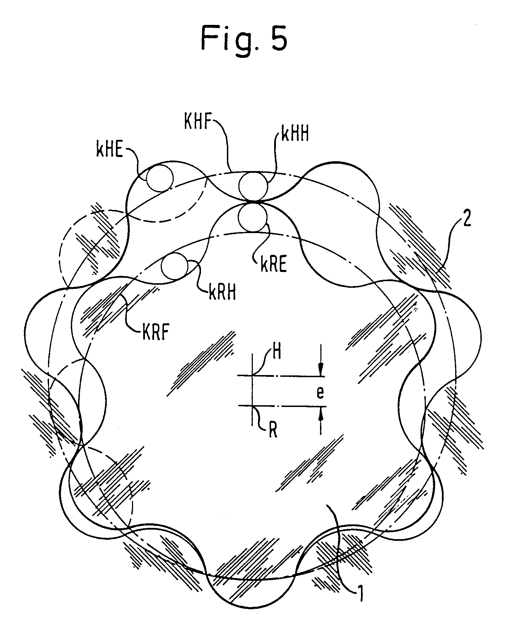

In gleicher Weise erzeugt das Abrollen des kleineren der beiden großen Rollkreise im Festkreis des Ritzels die dort die Zahnlücken begrenzenden Hypozykloiden (Fig. 3), die ebenfalls stetig mit radial zum kleineren Festkreises des Ritzels verlaufender Tangente in die die Zähne des Ritzels begrenzenden Epizykloiden übergehen. Auch hier ist natürlich jede zweite Hypozykloide weggelassen. Die weggelassenen Zykloiden sind in Fig. 5 jeweils einmal gestrichelt angedeutet.

Wie aus Fig. 5 ersichtlich kann man die die Zahnlücken und Zähne begrenzenden Zykloiden ebenso wie durch die großen Rollkreise etwas anschaulicher durch die entsprechenden in Fig. 5 gezeigten kleinen Rollkreise entwickeln. In diesem Beispiel sind alle kleinen Rollkreise gleich, wie dies auch den Beispielen gemäß Fig. 2 sowie Fig. 3 und 4 entspricht.

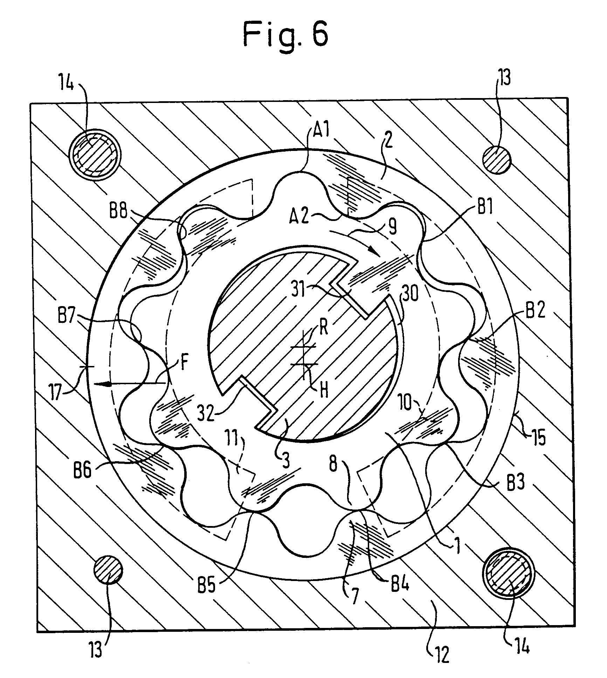

Bei der in Fig. 6 gezeigten Konstruktion sind für gleiche Teile gleiche Bezugszeichen wie in Fig. 1 verwendet. Im Gegensatz zu der Konstruktion gemäß Fig. 1 ist hier jedoch das Hohlrad 2 mit geringem Spiel radial im Gehäuse 12 gelagert. Die Verzahnung des Hohlrades 2 und des Ritzels 1 ist die gleiche wie im vorbeschriebenen Beispiel. Durch die eine Radialverlagerung verhindernde Lagerung des Hohlrades im Gehäuse wird auch eine konzentrische Rotation des Ritzels um den Ritzelmittelpunkt R erzwungen, da das Ritzel um seine Achse R drehbar mit seiner Verzahnung in der Verzahnung des Hohlrades 2 gelagert ist.

Ferner ist im Gegensatz zu der Ausbildung gemäß Fig. 1 das große Spiel hier zwischen der Welle 3 und der Bohrung des Ritzels 1 vorgesehen. Der entsprechende Spalt ist in Fig. 6 mit 30 bezeichnet. Zwei Mitnehmer 31 des Ritzels greifen in entsprechende Nuten 32 der Welle 3 ein. Die Nuten 32 sind um soweit größer als die Mitnehmer 31 ausgebildet, wie es nötig ist, um es der Welle zu erlauben, in der für sie "zu großen" Bohrung des Ritzels 1 die auftretenden Radialverlagerungen durchzuführen, ohne hierbei jedoch störende Radialdrücke auf die zylindrischen Innenflächen der Bohrung des Ritzels oder die einander zu gekehrten parallelen ebenen Flächen der Mitnehmer 31 auszuüben.

Für die Wirkungswiese dieser Konstruktion gilt analog das oben ausführlich zu der Konstruktion gemäß Fig. 1 dargelegte. Auch hier gilt, daß der Spalt zwischen der Welle 3 und der Bohrung des Ritzels 1 nicht wesentlich größer sein soll als nötig ist, um die maximalen Radialverlagerungen der Welle zuzulassen, da ja letzten Endes die Welle auch hier nicht nur die Aufgabe hat, die Drehung des Ritzels zu bewirken, sondern eine Rotation der Ritzelmitte R um die Mitte des Hohlrades H zu verhindern.

**Patentansprüche**

1. Als Zahnringpumpe ausgebildete Ölpumpe für Kolbenverbrennungsmotoren und automatische Getriebe
   - mit einem Pumpengehäuse (12),
   - mit einem Zahnritzel (1), das auf der Kurbelwelle des Motors bzw. der Eingangswelle des Getriebes drehstarr sitzt, und
   - mit einem im Gehäuse (12) axial und radial geführten, mit dem Ritzel (1) kämmenden Hohlrad (2), welches einen Zahn mehr aufweist als das Ritzel (1),
   
   dadurch **gekennzeichnet, daß**
   entweder bei mit minimalem Radialspiel im Gehäuse (12) geführtem Hohlrad (2) das Ritzel (1) auf der Welle (3) oder bei fest auf der Welle (3) sitzendem Ritzel (1) das Hohlrad (29) im Gehäuse in Radialrichtung mit einem Spiel geführt ist, das groß genug ist, um die von der Welle (3) ausgeführten bzw. dem Ritzel (1) aufgezwungenen Radialbewegungen nicht zu behindern, aber weitaus kleiner als die Exzentrizität (e) zwischen Ritzel (1) und Hohlrad (2),
   das Hohlrad (2) und das Ritzel (1) mit ihren Verzahnungen in Radialrichtung mit minimalem Spiel in- bzw. aufeinander gelagert sind,
   die Zahnköpfe und -lücken der Räder (1, 2) das Profil von Zykloiden aufweisen, welche durch Abrollen von Rollkreisen (kHE, kHH, KRE, kRH, Fig. 3) an konzentrisch zu den jeweiligen Radachsen (HR) verlaufenden Festkreisen (KHF, KRF) gebildet sind,
   die Zahnköpfe des Ritzels (1) und die Zahnlücken des Hohlrades jeweils die Form von Epizykloiden haben, die durch Abrollen eines ersten Rollkreises (kRE, kHE) gebildet sind, die Zahnlücken des Ritzels (1) und die Zahnköpfe des Hohlrades (2) jeweils die Form von Hypozykloiden haben, die durch Abrollen eines zweiten Rollkreises (kRH, kHH) gebildet sind, und daß die Summe der Umfänge der beiden Rollkreise wenigstens angenähert, vorzugsweise jedoch genau gleich der Zahnteilung der Räder auf deren Festkreisen (KRF, KHF) ist.

2. Ölpumpe nach Anspruch 1, **dadurch gekennzeichnet,** daß die beiden (kleinen) Rollkreise (kHE und kRE einerseits und kRH und kHH andererseits) gleiche Durchmesser haben.

3. Ölpumpe nach Anspruch 1 oder 2, **dadurch gekennzeichnet,** daß die Festkreise (KRF, KHF) zur Erzeugung der Zykloiden jeweils gleich dem Teil- oder Wälzkreis des Rades sind.

4. Ölpumpe nach Anspruch 1, 2 oder 3, **dadurch gekennzeichnet,** daß der Festkreisradius (a1, a2) jedes Zahnrades (1,2) gleich dem Produkt aus dem Achsabstand (e) der beiden Räder (1,2) und der Zähnezahl des jeweiligen Rades ist, und daß die Summe der beiden kleinen Rollkreisradien gleich dem Achsabstand (e) ist.

5. Zahnringpumpe nach Anspruch 1 bis 4, **dadurch gekennzeichnet,** daß das Zahnkopfspiel (S) an dem der Stelle tiefsten Zahneingriffs gegenüberliegenden Zahneingriff nur wenige Hundertstel Millimeter, vorzugsweise zwischen 2 und 5 Hundertstel Millimeter beträgt.

6. Zahnringpumpe nach Anspruch 1 bis 5, **dadurch gekennzeichnet,** daß zumindest die zykloidisch ausgebildeten Zahnköpfe beider Zahnräder oberflächengehärtet sind.

7. Zahnringpumpe nach Anspruch 1 bis 6, **dadurch gekennzeichnet,** daß der Radsatz, bestehend aus Ritzel und Hohlrad, im pulvermetallischen Sinterverfahren hergestellt ist.

8. Zahnringpumpe nach Anspruch 7, **dadurch gekennzeichnet,** daß der Radsatz im aus nichtmetallischen, pulverisierten Materialien, wie z.B. SiC hergestellt ist.

**Claims**

1. An oil pump constructed as gear ring pump for reciprocating piston internal-combustion engines and automatic transmissions comprising
   - a pump housing (12)
   - a pinion (1) which is non-rotatably mounted on the crankshaft of the engine or the input shaft of the transmission,
   - and a hollow gear (2) which is axially and radially guided in the housing (12), meshes with the pinion (1) and has one tooth more than said pinion (1),

characterized in that either with the hollow gear (2) guided with minimum radial play in the housing (12) the pinion (1) on the shaft (3) or with the pinion (1) fixedly mounted on the shaft (3), the hollow gear (2) in the housing (12) is guided in radial direction with a play which is large enough not to inhibit the radial movements executed by the shaft (3) or imparted to the pinion (1) but is far smaller than the eccentricity (e) between pinion (1) and hollow gear (2),

the hollow gear (2) and the pinion (1) are mounted in or on each other with their toothings in radial direction with minimum play,

the tooth heads and tooth gaps of the gears (1, 2) have the profile of cycloids which are formed by rolling of pitch circles (kHE, kHH, kRE, kRH, Fig. 3) on fixed circles (KHF, KRF) extending concentrically to the respective gear axes (HR), the tooth heads of the pinion (1) and the tooth gaps of the hollow gear each have the form of epicycloids which are formed by rolling of a first pitch circle (kRE, kHE), the tooth gaps of the pinion (1) and the tooth heads of the hollow gear (2) each have the form of hypocycloids which are formed by rolling of a second pitch circle (kRH, kHH), and the sum of the circumferences of the two pitch circles is at least approximately, preferably however exactly, equal to the tooth pitch of the gears on their fixed circles (kRF, KHF).

2. An oil pump according to claim 1, charaterized in that the two (small) pitch circles (kHE and kRE on the one hand and kRH and kHH on the other hand) have the same diameters.

3. An oil pump according to claim 1, characterized in that the fixed circles (KRF, KHF) for generating the cyloids are each equal to the pitch or rolling circle of the gear.

4. An oil pump according to claim 1, characterized in that the fixed circle radius (a1, a2) of each gear (1, 2) is equal to the product of the axial spacing (e) of the two gears (1, 2) and the tooth number of the respective gear and that the sum of the two small pitch circle radii is equal to the axial spacing (e).

5. A gear ring pump according to claim 1, charaterized in that the tooth head play (S) at the tooth engagement opposite the point of deepest tooth engagement is only a few hundredths of a millimetre, preferably between 2 and 5 hundredths of a millimetre.

6. A gear ring pump according to claim 1, characterized in that at least the cycloidically formed tooth heads of both gears are surface-hardened.

7. A gear ring pump according to claim 1, characterized in that the gear set consisting of pinion and hollow gear is made by the powder-metallic sintering method.

8. A gear ring pump according to claim 7, characterized in that the gear set is made from nonmetallic pulverized materials, for example SiC.

**Revendications**

1. Pompe à huile configurée comme pompe à couronne dentée pour moteurs à combustion interne à piston et transmission automatique
   - avec un carter de pompe (12),
   - avec un pignon (1) placé de façon rigide en torsion sur le vilebrequin du moteur ou sur l'arbre primaire de la transmission, et
   - avec une roue à denture intérieure (2) guidée axialement et radialement dans le carter (12), en prise avec le pignon (1) et qui présente une dent de plus que le pignon (1), caractérisée en ce que soit le pignon (1) est guidé sur l'arbre (3) dans le cas d'une roue à denture intérieure (2) guidée dans le carter (12) avec un jeu radial minimum, soit la roue à denture intérieure (29), dans le cas d'un pignon (1) placé sur l'arbre (3), est guidée dans le carter dans le sens radial avec un jeu suffisamment important pour ne pas gêner les mouvements radiaux effectués par l'arbre (3) ou imposés au pignon (1), mais nettement plus petit que l'excentricité (e) entre le pignon (1) et la roue à denture intérieure (2),

en ce que la roue à denture intérieure (2) et le pignon (1) avec leurs dentures sont placés l'un dans l'autre ou l'un sur l'autre dans le sens radial avec un jeu minimum,

en ce que les sommets des dents et les entredents des roues (1, 2) présentent le profil de cycloïdes formés par le déroulement de cercles primitifs (kHE, kHH, KRE, kRH, Fig. 3) sur des cercles fixes (KHF, KRF) concentriques aux axes de roue respectifs (HR),

en ce que les sommets des dents du pignon (1) et les entredents de la roue a denture intérieure possèdent respectivement la forme d'épicycloïdes qui sont formés par le déroulement d'un premier cercle primitif (kRE, kHE), en ce que les entredents du pignon (1) et les sommets des dents de la roue à denture intérieure (2) possèdent respectivement la forme d'hypocycloïdes formés par le déroulement d'un second cercle primitif (kRH, kHH),

et en ce que la somme des circonférences des deux cercles primitifs est plus ou moins égale, mais de préférence exactement égale au pas de dent des roues sur leurs cercles fixes (KRF, KHF).

2. Pompe à huile suivant la revendication 1, caractérisée en ce que les deux (petits) cercles primitifs (kHE et kRE, d'une part, et kRH et kHH, d'autre part) possèdent des diamètres identiques.

3. Pompe à huile suivant la revendication 1 ou 2, caractérisée en ce que les cercles fixes (KRF, KHF) pour la production de cycloïdes sont respectivement égaux au cercle primitif de référence ou de fonctionnement de la roue.

4. Pompe à huile suivant la revendication 1, 2 ou 3, caractérisée en ce que le rayon du cercle fixe (a1, a2) de chaque roue dentée (1,2) est égal au produit de l'entraxe (e) des deux roues (1,2) et du nombre de dents de la roue respective, et en ce que la somme des deux petits rayons de cercle primitif est égale à l'entraxe (e).

5. Pompe à couronne dentée suivant les revendications 1 à 4, caractérisée en ce que le vide à fond de dent de la roue (S) sur l'engrenure opposée à la position de l'engrenure la plus profonde n'est que de quelques centièmes de millimètre, de préférence 2 à 5 centièmes de millimètre.

6. Pompe à couronne dentée suivant les revendications 1 à 5, caractérisée en ce qu'au moins les sommets des dents cycloïdales des deux roues dentées ont subi une trempe superficielle.

7. Pompe à couronne dentée suivant les revendications 1 à 6, caractérisée en ce que l'engrenage, composé du pignon et la roue à denture intérieure, est fabriqué par le procédé de frittage en métallurgie des poudres.

8. Pompe à couronne dentée suivant la revendication 7, caractérisée en ce que l'engrenage est fabriqué dans des matières pulvérisées non métalliques telles que SiC.

# Fig. 1

# Fig. 2

# Fig. 3

# Fig. 4

# Fig. 5

# Fig. 6